**Europäisches Patentamt**

**European Patent Office**

**Office européen des brevets**

(19)

(11) Veröffentlichungsnummer : **0 154 804**
**B1**

(12) **EUROPÄISCHE PATENTSCHRIFT**

(45) Veröffentlichungstag der Patentschrift :
09.09.87

(21) Anmeldenummer : 85101167.6

(22) Anmeldetag : 05.02.85

(51) Int. Cl.⁴ : **C 08 L 51/00, C 08 L 57/00**

(54) **Polymermischungen mit matter Oberfläche.**

(30) Priorität : 18.02.84 DE 3405938

(43) Veröffentlichungstag der Anmeldung :
18.09.85 Patentblatt 85/38

(45) Bekanntmachung des Hinweises auf die Patenterteilung : 09.09.87 Patentblatt 87/37

(84) Benannte Vertragsstaaten :
BE DE FR GB IT NL

(56) Entgegenhaltungen :
FR-A- 2 518 105

(73) Patentinhaber : BAYER AG
Konzernverwaltung RP Patentabteilung
D-5090 Leverkusen 1 Bayerwerk (DE)

(72) Erfinder : Eichenauer, Herbert, Dr.
Goethestrasse 71
D-4047 Dormagen 1 (DE)
Erfinder : Döring, Joachim, Dr.
Silesiusstrasse 78
D-5000 Köln 80 (DE)
Erfinder : Ott, Karl-Heinz, Dr.
Paul-Klee-Strasse 54
D-5090 Leverkusen 1 (DE)
Erfinder : Bottenbruch, Ludwig, Dr.
Woehlerstrasse 5
D-4150 Krefeld 1 (DE)

## Beschreibung

Die Erfindung betrifft Polymermischungen mit matter Oberfläche auf der Basis von Pfropfpolymerisaten mit sauren Funktionen und Thermoplastharzen mit basischen Funktionen.

Polymermischungen mit elastisch-thermoplastischen Eigenschaften und matter Oberfläche sind von wachsendem Interesse für Anwendungsbereiche, bei denen hohe Zähigkeit und gleichzeitig Blendfreiheit gefordert werden, so z. B. für Teile im Automobilinnenbereich oder für Geräteabdeckungen.

Bisher wurde versucht, solche Polymermischungen durch Einsatz großer Kautschukteilchen (vgl. z. B. US-PS 4 169 869) oder Verwendung unvernetzter oder nur schwach vernetzter Kautschuke (vgl. z. B. DE-OS 2 057 936) als Pfropfgrundlage der Pfropfpolymerisate herzustellen.

Bei allen diesen Versuchen wird aber die erwünschte Oberflächenbeschaffenheit mit dem Verlust an ebenfalls gewünschten Produktqualitäten wie z. B. Kerbschlagzähigkeit, Härte oder Verarbeitbarkeit erkauft.

Gegenstand der Erfindung sind matte Polymermischungen aus

A) 99,95 bis 0,05 Gew.%, bevorzugt 85 bis 15 Gew.%, eines Pfropfproduktes eines Gemisches aus 40 bis 99,9 Gew.-Teilen Styrol, $\alpha$-Methylstyrol, p-Methylstyrol, Vinyltoluol, Methylmethacrylat oder Mischungen daraus, 40 bis 0,1 Gew.-Teilen einer eine polymerisierbare Doppelbindung enthaltenden Mono- oder Disäure und 0 bis 49 Gew.-Teilen Acrylnitril auf einen teilchenförmigen Kautschuk mit einem mittleren Teilchendurchmesser ($d_{50}$) von 0,05 bis 20,0 $\mu$m und einer Glastemperatur $\leq 10\,°C$ mit einem Gesamtkautschukgehalt von 5 bis 80 Gew.% und

B) 0,05 bis 99,95 Gew.%, bevorzugt 15 bis 85 Gew.%, eines thermoplastischen Harzes, das 0,1 bis 40 Gew.% eines vinylgruppenhaltigen basischen Monomeren eingebaut enthält.

Als Pfropfgrundlage für das Pfropfprodukt A) kommen praktisch alle Kautschuke mit Glastemperaturen $\leq 10\,°C$ in Frage. Beispiele sind Polybutadien, Polyisopren, Styrol-Butadien-Copolymerisate, Acrylnitril-Butadien-Copolymerisate, Acrylatkautschuke, EPM-Kautschuke (Ethylen/Propylen-Kautschuke) und EPDM-Kautschuke (Ethylen/Propylen/Dien-Kautschuke, die als Dien ein nichtkonjugiertes Dien wie z. B. Hexadien-1,5 oder Norbornadien in kleinen Mengen enthalten).

Diese Kautschuke müssen in Form von Teilchen eines mittleren Durchmessers ($d_{50}$) von 0,05 bis 20,0 $\mu$m, bevorzugt von 0,1 bis 2,0 $\mu$m, besonders von 0,1 bis 1,0 $\mu$m und besonders bevorzugt von 0,1 bis 0,8 $\mu$m vorliegen.

Das Pfropfprodukt A) wird durch Pfropfpolymerisation in Emulsion, Suspension oder Lösung oder durch Kombination dieser Verfahren in an sich bekannter Weise hergestellt.

Es enthält 5 bis 80 Gew.% Kautschuk, insbesondere 20 bis 60 Gew.%, und weist einen Gelgehalt, gemessen in Aceton bei 25 °C, von 30 bis 90 Gew.%, insbesondere 40 bis 80 Gew.% auf.

Als Pfropfmonomere sind z. B. Styrol, $\alpha$-Methylstyrol, p-Methylstyrol, Vinyltoluol, Acrylnitril, Methacrylnitril, Methylmethacrylat, Vinylacetat oder Mischungen daraus geeignet, insbesondere Mischungen von Acrylnitril mit Styrol.

Das Pfropfprodukt A) wird durch Polymerisation dieser Monomeren in Gegenwart der Dien- oder Acrylatkautschuke hergestellt, wobei als weitere Monomerkomponente eine polymerisierbare Mono- oder Disäure, z. B. Acrylsäure, Methacrylsäure, Maleinsäure, Fumarsäure, Itaconsäure, Crotonsäure, Zimtsäure, Vinylsulfonsäure, Vinylbenzolsulfonsäure bzw. deren Gemische, wobei aliphatische $C_3$-$C_{10}$- oder aromatische $C_9$-$C_{18}$-Mono- oder Dicarbonsäuren bevorzugt sind, erforderlich ist.

Als Monomerkomponenten zum Aufbau des Thermoplastharzes B) sind z. B. Styrol, $\alpha$-Methylstyrol, p-Methylstyrol, Vinyltoluol, Acrylnitril, Methacrylnitril, Methylmethacrylat, Vinylacetat, N-Phenylmaleinimid oder Mischungen daraus geeignet, insbesondere Mischungen von Acrylnitril und Styrol.

Die Herstellung des Thermoplastharzes B) erfolgt durch Polymerisation dieser Monomeren in Emulsion, Suspension oder Lösung in an sich bekannter Weise, wobei als weitere Monomerkomponente eine vinylgruppenhaltige basische Verbindung (z. B. 2-Vinylpyridin, 3-Vinylpyridin, 4-Vinylpyridin, N-Vinylimidazol, p-Dimethylaminostyrol, 4-Vinylpyrimidin, N-Vinylcarbazol, N-Vinylpyrrol, N-Vinylindol, Dimethylaminoethylmethacrylat bzw. deren Gemische) erforderlich ist.

Bei der Herstellung des Pfropfproduktes A) und des Thermoplastharzes B) durch Emulsionspolymerisation ist es nötig, bei der Wahl der Emulgatoren auf das saure bzw. basische Monomere Rücksicht zu nehmen. Bei Anwesenheit der sauren Monomeren muß die Polymerisation im sauren Milieu und somit unter Verwendung von Emulgatoren erfolgen, die bei pH-Werten unter 7 noch wirksam sind. Auch bei der Aufarbeitung, d. h. bei der Fällung der Latices muß darauf geachtet werden, daß der saure bzw. basische Charakter der Pfropfpolymerisate erhalten bleibt.

Die erfindungsgemäßen Polymermischungen können erhalten werden, indem man ihre Bestandteile A) und B) miteinander bei höheren Temperaturen, insbesondere bei T = 100 °C bis 280 °C, z. B. in Knetern, auf Walzenstühlen oder Schneckenmaschinen mischt. Fallen A) und B) als Dispersionen, Suspensionen oder Lösungen an, so kann man diese mischen und gemeinsam aufarbeiten.

Den Mischungen können übliche Additive wie Antioxidantien, Alterungsschutzmittel, Gleitmittel, Flammschutzmittel, Füllstoffe, Pigmente, Antistatika in den üblichen Mengen zugesetzt werden.

Die erfindungsgemäßen Mischungen sind matte flexible thermoplastische Formmassen mit guten Fließeigenschaften bei Verarbeitung durch Extrusion, Kalandrierung und Spritzguß. Sie können zu matten Formkörpern verarbeitet werden, sind aber auch als Modifikatoren für andere Kunststoffe geeignet, insbesondere für Thermoplaste wie Acrylnitril/Butadien/Styrol-Terpolymerisate (ABS), Methylmethacrylat/Butadien/Styrol-Terpolymerisate (MBS), Styrol/Acrylnitril-Copolymerisate (SAN), α-Methylstyrol/Acrylnitril-Copolymerisate, Polystyrol, schlagzähes Polystyrol (HIPS), Polymethylmethacrylat, Polyvinylchlorid, Polycarbonat, Polycarbonat/ABS-Gemische, Polyphenylenoxid, Polyphenylenoxid/HIPS-Gemische, Polyamide, z. B. Polyamid 6, Polyamid 66, Polyester, z. B. Polyethylenterephthalat, Polybutylenterephthalat. Als « Mattierungsmodifikatoren » dienen bevorzugt solche erfindungsgemäßen Mischungen, die viel Kautschuk — etwa 50 bis 70 % — enthalten. Ihre Menge ist im allgemeinen 5 bis 40 Gew.%, bezogen auf das gesamte modifizierte Produkt.

## Beispiele und Vergleichsbeispiele

Die folgenden Beispiele erläutern die Erfindung.

Die angegebenen Teile sind Gew.-Teile und beziehen sich immer auf Festbestandteile bzw. polymerisierbare Bestandteile.

### Herstellung der Pfropfprodukte

In einem Reaktor werden G Teile Kautschukgrundlage (in Form eines Latex mit einem Feststoffgehalt zwischen 35 und 50 Gew.%) auf 65 °C erwärmt, wonach 0,5 Teile Kaliumpersulfat (gelöst in 20 Teilen Wasser) zugegeben werden. Anschließend werden M Teile des in Tabelle 1 angegebenen Monomerengemischs sowie 2 Teile des Natriumsalzes von $C_9$-$C_{18}$-Alkylsulfonsäuren als Emulgator (gelöst in 25 Teilen Wasser) innerhalb 4 Stunden zudosiert, wobei die Pfropfreaktion erfolgt. Nach einer Nachreaktionszeit wird der Pfropflatex nach der Zugabe von 1,2 Teilen Antioxidantien in einer wäßrigen Magnesiumsulfat/Essigsäurelösung koaguliert. Das resultierende Pulver wird mit Wasser, einer sauren Lösung und nochmals mit Wasser gewaschen und bei 70 °C im Vakuum getrocknet.

Tabelle 1

Zusammensetzung der Pfropfprodukte

| Pfropfprodukt | Kautschukgrundlage | mittlere Teilchen-größe/Durch-messer/ | G /Teile/ | Monomere /Gew.-Teile/ | M /Teile/ |
|---|---|---|---|---|---|
| 1 (Vergleich) | Polybutadienlatex | 0,4 µm | 50 | 72 Styrol<br>28 Acrylnitril | 50 |
| 2 (Vergleich) | Polybutylacrylatlatex | 0,5 µm | 50 | 72 Styrol<br>28 Acrylnitril | 50 |
| 3 | Polybutadienlatex | 0,4 µm | 50 | 65 Styrol<br>25 Acrylnitril<br>10 Methacrylsäure | 50 |
| 4 | Polybutadienlatex | 0,4 µm | 60 | 55 Styrol<br>15 Acrylnitril<br>10 Methylmethacrylat<br>20 Acrylsäure | 40 |
| 5 | Polybutylacrylatlatex | 0,5 µm | 50 | 61 Styrol<br>24 Acrylnitril<br>15 Methacrylsäure | 50 |

### Herstellung der Thermoplastharze

In einem Reaktor werden 250 Teile Wasser, 2 Teile des Natriumsalzes der disproportionierten Abietinsäure als Emulgator und 0,3 Teile Kaliumpersulfat auf 65 °C erwärmt, wonach 100 Teile des in Tabelle 2 angegebenen Monomerengemisches sowie die zur Einstellung eines mittleren Molekulargewichts ($M_w$) von ca. 80 000 bis 90 000 notwendige tert.-Dodecylmercaptanmenge innerhalb 4 Stunden zudosiert werden. Nach einer Nachreaktionszeit wird der Latex nach der Zugabe von 1,2 Teilen

3

Antioxidantien in einer wäßrigen Magnesiumsulfat/Essigsäure-Lösung koaguliert. Das resultierende Pulver wird mit Wasser, einer basischen Lösung und nochmals mit Wasser gewaschen und bei 70 °C im Vakuum getrocknet.

Tabelle 2

Zusammensetzung der Thermoplastharze

| Thermoplastharz | Monomere /Gew.-Teile/ |
|---|---|
| 1 (Vergleich) | 72 Styrol<br>28 Acrylnitril |
| 2 | 68 Styrol<br>27 Acrylnitril<br>5 2-Vinylpyridin |
| 3 | 65 Styrol<br>25 Acrylnitril<br>10 2-Vinylpyridin |
| 4 | 55 Styrol<br>15 Acrylnitril<br>10 Methylmethacrylat<br>20 N-Vinylimidazol |
| 5 | 66 $\alpha$-Methylstyrol<br>29 Acrylnitril<br>5 2-Vinylpyridin |

Herstellung und Ausprüfung der Formmassen

P Teile des Pfropfproduktes A) und H Teile des Thermoplastharzes B) werden mit 3 Teilen eines Gleitmittels in einem Kneter miteinander vermischt und anschließend zu Normkleinstäben, einer Platte (zur Oberflächenbeurteilung) und einer Spirale (zur Beurteilung der Fließweglänge) verspritzt. Ein Teil des Materials wurde durch Extrusion zu Platten verarbeitet. Die Kerbschlagzähigkeit wurde bei Raumtemperatur ($a_k^{RT}$) und bei — 40 °C ($a_k^{-40°C}$) nach DIN 53 453 (Einheit : kJ/m²), die Kugeldruckhärte ($H_c$) nach DIN 53 456 (Einheit : N/mm²), die Wärmeformbeständigkeit (Vicat B) nach DIN 53 460 (Einheit : °C) und die Fließweglänge bei 220 °C an einer Spirale von ca. 8 mm Breite und ca. 2 mm Stärke (Einheit : cm) gemessen. Die Glanzmessung erfolgte nach DIN 67 530 an einer ebenen Platte bei einem Reflektionswinkel von 60° (Reflektometerwert) mit Hilfe des Mehrwinkel-Reflektometers « Multi-Gloss » der Firma Byk-Mallinckrodt (siehe Tabelle 3).

Tabelle 3

Zusammensetzungen und Prüfdaten der Formmassen

| Formmasse | Pfropf-produkt | P /Teile/ | Thermo-plast-harz | H /Teile/ | $a_k$ RT | $a_k$ -40°C | $H_c$ | Vicat B | Fließ-länge | Reflekto-meterwert | Aussehen der extru-dierten Platte |
|---|---|---|---|---|---|---|---|---|---|---|---|
| 1 (Vergleich) | 1 | 40 | 1 | 60 | 16 | 11 | 86 | 97 | 41 | 78 | glänzend |
| 2 (Vergleich) | 1 | 40 | 3 | 60 | 14 | 12 | 81 | 94 | 42 | 76 | glänzend |
| 3 (Vergleich) | 2 | 40 | 1 | 60 | 15 | 5 | 85 | 95 | 40 | 80 | glänzend |
| 4 (Vergleich) | 3 | 40 | 1 | 60 | 12 | 7 | 87 | 98 | 34 | 25 | matt |
| 5 | 3 | 40 | 2 | 60 | 15 | 10 | 89 | 100 | 39 | 17 | matt |
| 6 | 3 | 25 | 3 | 75 | 10 | 5 | 92 | 101 | 40 | 12 | matt |
| 7 | 3 | 30 | 5 | 70 | 11,5 | 5 | 91 | 107 | 33 | 16 | matt |
| 8 | 4 | 40 | 4 | 60 | 14 | 8 | 91 | 100 | 37 | 8 | matt |
| 9 | 5 | 40 | 3 | 60 | 14 | 5 | 87 | 97 | 39 | 21 | matt |

4

Wie aus Tabelle 3 ersichtlich ist, führt nur die Abmischung von Pfropfprodukten mit einpolymerisierten sauren Monomerkomponenten und Thermoplastharzen mit eingebauten basischen Monomeren sowohl im Spritzguß als auch bei Extrusionsverarbeitung zu gleichmäßig matten Oberflächen ohne negativen Einfluß auf die sonstigen Eigenschaften. Dabei wird außerdem eine verbesserte Wärmeformbeständigkeit und eine höhere Härte erreicht (Formmassen 5 bis 9). Die Abmischung eines mit basischen Monomeren modifizierten Thermoplastharzes mit einem unmodifizierten Pfropfprodukt führt zu hochglänzenden Formteilen (Formmassen 1 bis 3), die Abmischung eines mit sauren Monomeren modifizierten Pfropfproduktes mit einem unmodifizierten Thermoplastharz ergibt zwar auch eine mattierte Oberfläche, gleichzeitig treten jedoch reduzierte Fließfähigkeit und ein Abfall der Kerbschlagzähigkeit auf (Formmasse 4).

## Patentansprüche

1. Mischung aus

A) 99,95 bis 0,05 Gew.% eines Pfropfproduktes eines Gemisches aus 40 bis 99,9 Gew.-Teilen Styrol, $\alpha$-Methylstyrol, p-Methylstyrol, Vinyltoluol, Methylmethacrylat oder Mischungen daraus, 40 bis 0,1 Gew.-Teilen einer eine polymerisierbare Doppelbindung enthaltenden Mono- oder Disäure und 0 bis 49 Gew.-Teilen Acrylnitril auf einen teilchenförmigen Kautschuk mit einem mittleren Teilchendurchmesser ($d_{50}$) von 0,05 bis 20,0 $\mu$m und einer Glastemperatur $\leq$ 10 °C mit einem Gesamtkautschukgehalt von 5 bis 80 Gew.% und

B) 0,05 bis 99,95 Gew.% eines thermoplastischen Harzes, das 0,1 bis 40 Gew.% eines vinylgruppenhaltigen basischen Monomeren eingebaut enthält.

2. Mischung aus

A) 85 bis 15 Gew.%, bevorzugt 80 bis 20 Gew.%, eines Pfropfproduktes eines Gemisches aus 60 bis 85 Gew.-Teilen Styrol, $\alpha$-Methylstyrol, p-Methylstyrol, Vinyltoluol, Methylmethacrylat oder Mischungen daraus, 30 bis 5 Gew.-Teilen einer eine polymerisierbare Doppelbindung enthaltenden Mono- oder Disäure und 10 bis 40 Gew.-Teilen Acrylnitril auf einen teilchenförmigen Kautschuk mit einem mittleren Teilchendurchmesser ($d_{50}$) von 0,1 bis 1,0 $\mu$m und einer Glastemperatur $\leq$ 10 °C mit einem Gesamtkautschukgehalt von 30 bis 70 Gew.% und

B) 15 bis 85 Gew.%, bevorzugt 20 bis 80 Gew.%, eines thermoplastischen Harzes, bestehend aus 60 bis 89 Gew.-Teilen Styrol, $\alpha$-Methylstyrol, p-Methylstyrol, Vinyltoluol, Methylmethacrylat, N-phenylmaleinimid oder Mischungen daraus, 30 bis 1 Gew.-Teilen einer vinylgruppenhaltigen, bevorzugt heterocyclischen Stickstoffbase und 10 bis 40 Gew.-Teilen Acrylnitril.

3. Mischung gemäß Anspruch 1 und 2, mit Acrylsäure oder Methacrylsäure bzw. deren Gemische als Säure.

4. Mischung gemäß Anspruch 1 und 2, mit 2-Vinylpyridin oder 4-Vinylpyridin bzw. deren Gemisch als vinylgruppenhaltiges basisches Monomeres.

## Claims

1. Mixture of

A) 99.95 to 0.05 % by weight of a graft product of a mixture of 40 to 99.9 parts by weight of styrene, $\alpha$-methylstyrene, p-methylstyrene, vinyltoluene, methyl methacrylate or mixtures thereof, 40 to 0.1 parts by weight of a mono- or diacid containing a polymerisable double bond and 0 to 49 parts by weight of acrylonitrile on a particulate rubber with an average particle diameter ($d_{50}$) of 0.05 to 20.0 $\mu$m and a glass temperature $\leq$ 10 °C, with a total rubber content of 5 to 80 % by weight and

B) 0.05 to 99.95 % by weight of a thermoplastic resin which contains, incorporated therein, 0.1 to 40 % by weight of a vinyl-group-containing basic monomer.

2. Mixture of

A) 85 to 15 % by weight, preferably 80 to 20 % by weight, of a graft product of a mixture of 60 to 85 parts by weight of styrene, $\alpha$-methylstyrene, p-methylstyrene, vinyltoluene, methyl methacrylate or mixtures thereof, 30 to 5 parts by weight of a mono- or diacid containing a polymerisable double bond and 10 to 40 parts by weight of acrylonitrile on a particulate rubber with an average particle diameter ($d_{50}$) of 0.1 to 1.0 $\mu$m and a glass temperature $\leq$ 10 °C, with a total rubber content of 30 to 70 % by weight and

B) 15 to 85 % by weight, preferably 20 to 80 % by weight, of a thermoplastic resin consisting of 60 to 89 parts by weight of styrene, $\alpha$-methylstyrene, p-methylstyrene, vinyltoluene, methyl methacrylate, N-phenylmaleimide or mixtures thereof, 30 to 1 parts by weight of a vinyl-group-containing, preferably heterocyclic nitrogen base and 10 to 40 parts by weight of acrylonitrile.

3. Mixture according to Claim 1 and 2, containing acrylic acid or methacrylic acid or mixtures thereof as the acid.

4. Mixture according to Claim 1 and 2, containing 2-vinylpyridine or 4-vinylpyridine or a mixture thereof as the vinyl-group-containing basic monomer.

**0 154 804**

**Revendications**

1. Mélange de :

A) 99,95 à 0,05 % en poids d'un produit de greffage d'un mélange de 40 à 99,9 parties en poids de styrène, d'alpha-méthylstyrène, de p-méthylstyrène, de vinyltoluène, de méthacrylate de méthyle ou de mélanges de ces monomères, 40 à 0,1 partie en poids d'un mono- ou di-acide contenant une double liaison polymérisable et 0 à 49 parties en poids d'acrylonitrile, sur un caoutchouc à l'état de particules à un diamètre de particule moyen ($d_{50}$) de 0,05 à 20,0 $\mu$m et une température de transition vitreuse inférieure ou égale à 10 °C, à une teneur totale en caoutchouc de 5 à 80 % en poids, et

B) 0,05 à 99,95 % en poids d'une résine thermoplastique contenant à l'état polymérisé 0,1 à 40 % en poids d'un monomère basique contenant des groupes vinyle.

2. Mélange de :

A) 85 à 15 % en poids, de préférence 80 à 20 % en poids, d'un produit de greffage d'un mélange de 60 à 85 parties en poids de styrène, d'alpha-méthylstyrène, de p-méthylstyrène, de vinyltoluène, de méthacrylate de méthyle, ou de mélanges de ces monomères, 30 à 5 parties en poids d'un mono- ou di-acide contenant une double liaison polymérisable et 10 à 40 parties en poids d'acrylonitrile sur un caoutchouc à l'état de particules à un diamètre de particule moyen $d_{50}$ de 0,1 à 1,0 $\mu$m et à une température de transition vitreuse inférieure ou égale à 10 °C, avec une teneur totale en caoutchouc de 30 à 70 %, et

B) 15 à 85 % en poids, de préférence 20 à 80 % en poids, d'une résine thermoplastique consistant en 60 à 89 parties en poids de styrène, d'alpha-méthylstyrène, de p-méthylstyrène, de vinyltoluène, de méthacrylate de méthyle, de N-phénylmaléimide ou de mélanges de ces monomères, 30 à 1 partie en poids d'une base contenant des groupes vinyle, de préférence une base hétérocyclique azotée, et 10 à 40 parties en poids d'acrylonitrile.

3. Mélange selon les revendications 1 et 2, dans lequel l'acide consiste en acide acrylique ou méthacrylique ou un mélange de ces acides.

4. Mélange selon les revendications 1 et 2, dans lequel le monomère basique contenant le groupe vinyle est la 2-vinylpyridine ou la 4-vinylpyridine ou un mélange de ces composés.

6